(19) Europäisches Patentamt
European Patent Office
Office européen des brevets

(11) EP 0 549 343 B1

(12) EUROPEAN PATENT SPECIFICATION

(45) Date of publication and mention of the grant of the patent:
**14.05.1997 Bulletin 1997/20**

(51) Int. Cl.[6]: **C07F 7/08**, C08K 5/54, C08L 83/08

(21) Application number: **92311758.4**

(22) Date of filing: **23.12.1992**

# (54) Siloxane compounds, their preparation and use

Siloxane Verbindungen, ihre Herstellung und Verwendung

Composés siloxane, leur préparation et utilisation

(84) Designated Contracting States:
**DE FR GB**

(30) Priority: **24.12.1991 JP 356414/91**

(43) Date of publication of application:
**30.06.1993 Bulletin 1993/26**

(73) Proprietor: **Shin-Etsu Chemical Co., Ltd.**
**Chiyoda-ku Tokyo 100 (JP)**

(72) Inventors:
- **Fukuda, Kenichi**
  **Takasaki-shi, Gunma-ken (JP)**
- **Tarumi, Yasuo**
  **Takasaki-shi, Gunma-ken (JP)**
- **Inomata, Hiroshi**
  **Annaka-shi, Gunma-ken (JP)**
- **Yamamoto, Yasushi**
  **Takasaki-shi, Gunma-ken (JP)**

(74) Representative: **Stoner, Gerard Patrick et al**
**MEWBURN ELLIS**
**York House**
**23 Kingsway**
**London WC2B 6HP (GB)**

(56) References cited:
**EP-A- 0 208 239**
**EP-A- 0 311 262**
**EP-A- 0 435 654**
**EP-A- 0 488 709**
**DE-A- 2 648 242**
**US-A- 4 057 566**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 549 343 B1

## Description

This invention relates to novel siloxane compounds effective for imparting adhesion to silicone resins or the like and thus bonding silicone resins or the like to various members. More particularly, it relates to siloxane compounds having a fluorinated group in a backbone and effective for imparting adhesion to fluorinated silicone resins and rubbers.

Several siloxane compounds are known to impart adhesion tosilicone resins. For example, Japanese Patent Applications 47605/1987, 47608/1987 and 49305/1987 disclose hydrogensiloxanes having a perfluoropolyether or perfluoroalkylene group in a backbone and containing at least two SiH groups in a molecule. These hydrogensiloxanes are represented by the following formula (6):

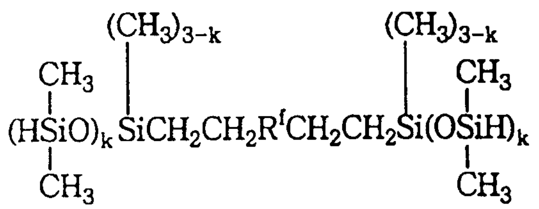

. . . ( 6 )

wherein $R^f$ is a perfluoropolyether or perfluoroalkylene group and k is equal to 1, 2 or 3.

These siloxane compounds, however, could not impart satisfactory adhesion to fluorinated silicone resins.

The general problem addressed herein is the provision of novel useful siloxane compounds; also methods of making them and their use for adhesion of silicones.

It would be preferable to achieve siloxane compounds which have good adhesion with fluorinated silicones.

Good solvent resistance and low water permeability are other preferred features.

The present inventors obtained siloxane compounds of the following formula (1) by effecting addition reaction between a perfluoropolyether or perfluoroalkylene group-containing hydrogensiloxane and an epoxy compound having an aliphatic double bond or an alkoxysilyl compound having an aliphatic double bond.

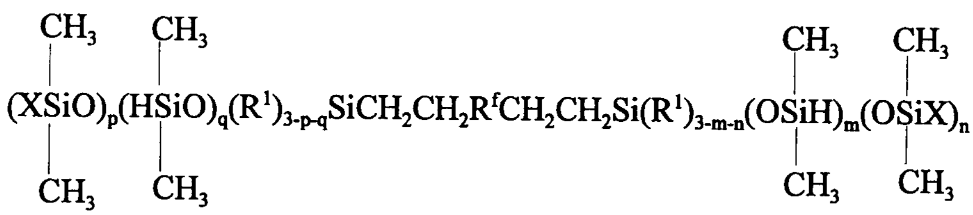

...(1)

wherein $R^f$ is a perfluoropolyether or perfluoroalkylene group,

groups $R^1$ are selected from monovalent lower hydrocarbon groups and groups of the formula (2):

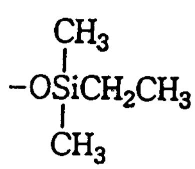

··· (2),

groups X are selected from groups of the following formulae (3), (4) and (5):

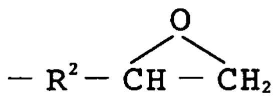 ...(3)

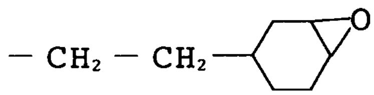 ...(4)

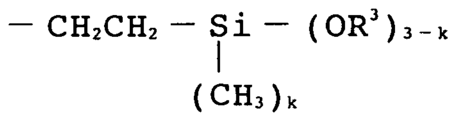 ...(5)

wherein $R^2$ is a divalent organic group, $R^3$ is a monovalent hydrocarbon group, and k is an integer of from 0 to 2, and

p, q, m and n are integers of 0 to 3 satisfying the reletionship: $0 < p + q \leqq 3$, $0 < m + n \leqq 3$, $0 < p + n$, $0 < q + m$ and $0 < p + q + m + n \leqq 6$.

We found that the siloxane compounds we prepared, that is, siloxane compounds containing at least one hydrogen atom attached to a silicon atom reactive with silicone resins (SiH group) and at least one epoxy- or alkoxysilyl-bearing organic group attached to a silicon atom participating in bonding to substrates or adherents, each in a molecule, had high affinity to fluorinated silicone resins and rubbers and greatly contribute to solvent resistance and minimal water permeability. Therefore, the compounds are useful tackifiers for imparting adhesion to fluorinated silicone resins and rubbers.

Methods of preparing the compounds, their use as tackifiers, and silicone resins or rubbers adhesion-modified by them are other aspects of the invention: see claims 8 to 12.

BRIEF DESCRIPTION OF THE DRAWINGS

FIGS. 1, 2, 3, 4, 5 and 6 are charts showing the IR absorption spectra of the siloxane compounds obtained in Examples 4, 5, 6, 7, 8, and 9, respectively.

DETAILED DESCRIPTION

The siloxane compounds of the present invention are represented by formula (1).

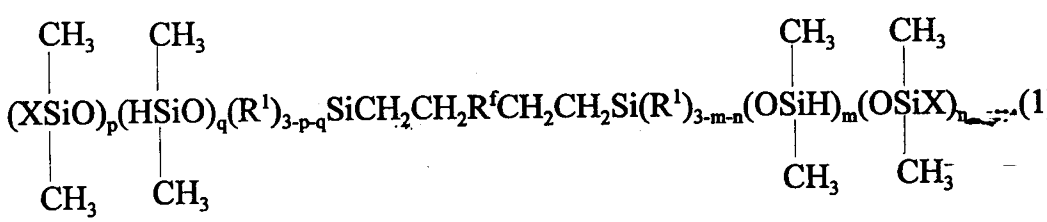 ...(1)

In formula (1), $R^f$ is a perfluoropolyether group or perfluoroalkylene group. Preferably, the perfluoropolyether groups have 4 to 15 carbon atoms and are typically represented by the following formulae (7) and (8).

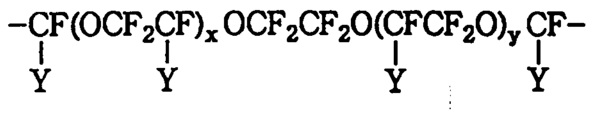 ··· (7)

Y is F or $CF_3$, and letters x and y are equal to 0, 1 or 2, meeting $0 \leqq x + y \leqq 3$.

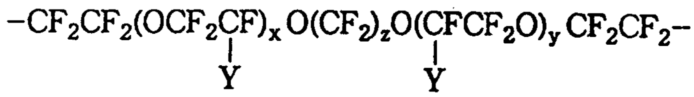 ··· (8)

Y, x and y are as defined above, and z is an arbitrary integer, preferably from 1 to 6.

Examples of the perfluoropolyether group are given below.

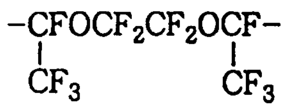 , 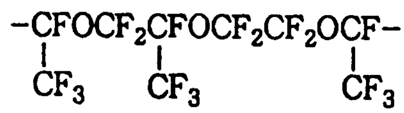 ,

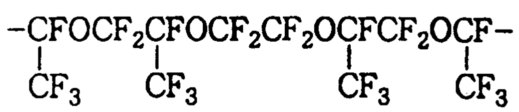 ,

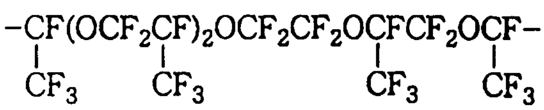 ,

$-CF_2CF_2O(CF_2)_4OCF_2CF_2-$ , 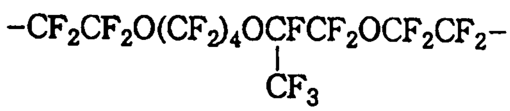 ,

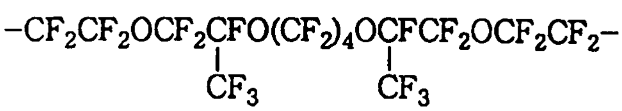 ,

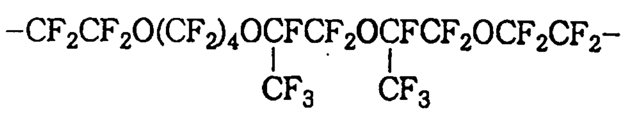

The perfluoroalkylene groups represented by $R^f$ preferably have 2 to 10 carbon atoms and typically accord with the following formula:

$$-C_wF_{2w}- \quad (9)$$

wherein w is an integer of 2 to 10. Examples include $-C_2F_4-$, $-C_4F_8-$, $-C_6F_{12}-$, and $-C_8F_{16}-$.

$R^1$ is a monovalent lower hydrocarbon group typically a $C_{1-6}$ hydrocarbon, usually alkyl such as methyl or ethyl. Or, it may be a group of formula (2):

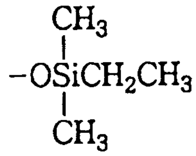

... (2)

X is a group of formula (3), (4) or (5).

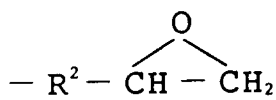

...(3)

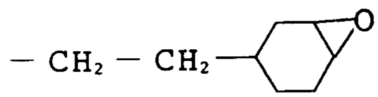

...(4)

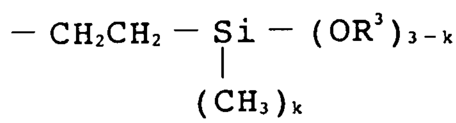

...(5)

In formula (3), $R^2$ is a divalent organic group, which is not particularly limited although it is preferably a lower alkylene group having 1 to 6 carbon atoms which may have a terminal or intervening oxygen atom. Divalent organic groups containing an ester bond are also acceptable. Examples are $-(CH_2)_4-$, $-(CH_2)_2OCH_2-$, $-CH_2CH_2-$, $-(CH_2)_3O-$, and $-(CH_2)_3OCH_2-$.

In formula (5), $R^3$ is a monovalent hydrocarbon group and k is an integer of from 0 to 2. The hydrocarbon groups represented by $R^3$ preferably have 1 to 6 carbon atoms and examples include $C_1$ - $C_6$ alkyl groups such as methyl, ethyl and propyl groups, $C_2$ - $C_6$ alkenyl groups such as vinyl, isopropenyl and butenyl groups, and cyclohexyl and phenyl groups.

Letters p, q, m and n are integers of 0 to 3, satisfying the relationship: $0 < p + q \leqq 3$, $0 < m + n \leqq 3$, $0 < p + n$, $0 < q + m$, and $0 < p + q + m + n \leqq 6$. This implies that the siloxane compounds of formula (1) have in a molecule at least one hydrogen atom attached to a silicon atom (or at least one SiH group) and at least one epoxy- or alkoxysilyl-bearing organic group attached to a silicon atom.

The siloxane compounds of the present invention may be synthesized by effecting addition reaction between an organohydrogensiloxane and an aliphatic double bond-containing epoxy or alkoxysilyl compound, that is, between a SiH bond in the former and an aliphatic double bond in the latter, in the presence of a platinum series catalyst.

In siloxane compound (1), one of the starting reactants is a hydrogensiloxane which is preferably of the general formula (10):

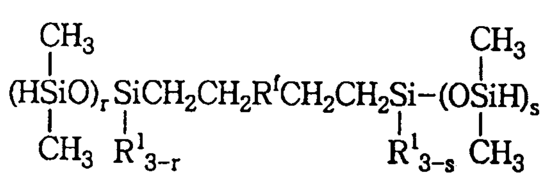

...(10)

wherein $R^f$ and $R^1$ are as defined above and r and s are integers of 0 to 3, satisfying $0 < r + s < 6$.

Preferred examples of the aliphatic double bond-containing epoxy compound are given by the following formulae (11) to (13).

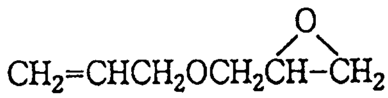 ...(11)

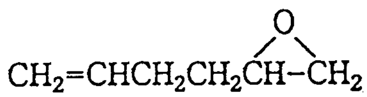 ...(12)

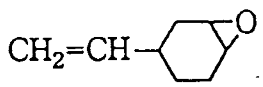 ...(13)

Preferred examples of the aliphatic double bond-containing alkoxy compound are given by the following formula (15)

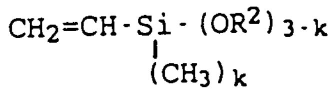 ...(15)

The addition reaction between the hydrogensiloxane of formula (10) and the aliphatic double bond-containing epoxy or alkoxy compound of formulae (11), (12), (13) and (15) may be carried out in a conventional manner using well-known addition reaction catalyst, typically platinum series catalysts. Exemplary catalysts include chloroplatinic acid, olefin complexes of chloroplatinic acid, alcohol-modified complexes of chloroplatinic acid, and vinylsiloxane complexes of chloroplatinic acid. For addition reaction, the temperature is generally 40 to 100°C, preferably 60 to 85°C.

Although the addition reaction may be carried out without solvent, the use of a solvent is preferred for reaction temperature control. Any solvent which does not give rise to side reaction with SiH and epoxy groups or adversely affect the catalyst may be used although those solvents which permit addition reaction under atmospheric pressure are preferred, for example, aromatic hydrocarbons such as benzene, toluene and xylene, and fluorinated aromatic compounds such as benzotrifluoride and n-xylenehexafluoride. At the end of addition reaction, the reaction product may be purified by removing the catalyst through adsorption on activated carbon or the like and distilling off the solvent.

The siloxane compounds described contain a fluorinated group, an SiH group reactive with silicone resins, and an epoxy-bearing organic group attached to a silicon atom participating in bonding to substrates or adherents, each in a backbone. We find that they have high affinity to silicone resins and rubbers, especially fluorinated silicone resins and rubbers and thus provide good adhesion thereto.

## EXAMPLE

Examples of the present invention are given below by way of illustration and not by way of limitation.

### Example 1

A 200-ml flask equipped with a condenser and thermometer was charged with 50 grams (0.045 mol) of a hydrogensiloxane of formula (16) and 50 grams of toluene and heated to a temperature of 60°C. With thorough stirring, 0.088 gram of a toluene solution containing a 2-ethyl-hexanol-modified platinum catalyst having a platinum concentration of 0.5% (Pt: $2.5 \times 10^{-6}$ mol) was added dropwise to the flask, and thereafter, 30.3 grams of a toluene solution containing 10.3 grams (0.090 mol) of an epoxy compound of formula (11) was added dropwise over 20 minutes.

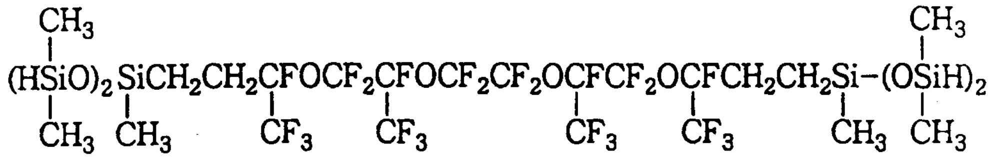

...(16)

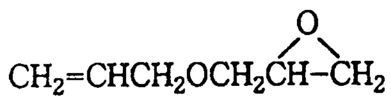

...(11)

The reaction mixture was allowed to age at 60°C for 30 minutes and then to cool down, shaken for 1 hour together with activated carbon, removed of the activated carbon by filtration, and subjected to vacuum distillation at 70°C and 1 mmHg for one hour for toluene removal, obtaining 58.5 grams of a product. The product was analyzed by gel permeation chromatography (GPC) to find that it contained 27.5 grams of a di-adduct (yield 46%).

The di-adduct isolated and collected by GPC was analyzed by proton-NMR, mass spectroscopy, IR absorption spectroscopy, elemental analysis and Si-H content measurement. As a result of these analyses, it was identified to be a mixture of compounds have the structure of formula (17) wherein a and b are integers of 0 to 2, meeting $a + b = 2$ .

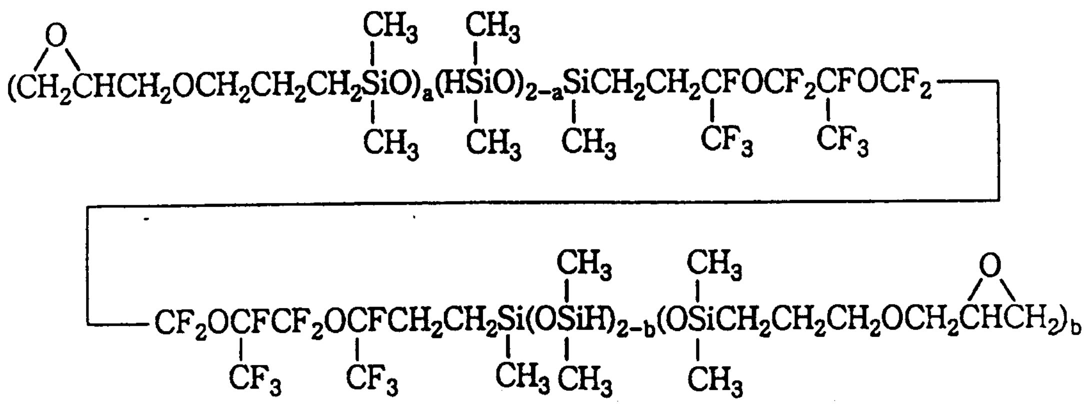

...(17)

<u>Elemental analysis</u>

| | C | H | Si | F |
|---|---|---|---|---|
| Calcd.* (%) | 34.18 | 4.68 | 12.62 | 34.14 |
| Found (%) | 33.97 | 4.81 | 12.55 | 34.96 |

* calculated as $C_{38}H_{62}F_{24}O_{12}Si_6$

Mass spectrometry

1340 ($M^+$)

IR absorption spectrum

There appeared a characteristic absorption peak attributable to a SiH group at wavenumber 2140 $cm^{-1}$ and a characteristic absorption peak attributable to an epoxy group (C-H) at wavenumber 3000-3080 $cm^{-1}$.

SiH content

| | |
|---|---|
| Calcd.: | 0.0015 mol/g |
| Found: | 0.0014 mol/g |

$^1$H-NMR spectrum

| | |
|---|---|
| 4.58~4.93ppm | (Si-H, m, 2H) |
| 0.13~0.56ppm | (Si-$CH_3$, m, 30H) |
| 0.66~1.08ppm | (Si-$CH_2$-, m, 8H) |
| 1.72~2.41ppm | (C-$CH_2$-CF, m, 4H) |
| 3.43~4.00ppm | (C-$CH_2$-O, m, 8H) |
| 1.21~1.65ppm | (C-$CH_2$-C, m, 4H) |
| 2.94~3.28ppm | |

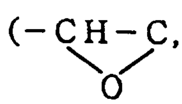 m, 2H)

2.45~2.88ppm

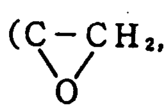 m, 4H)

Example 2

A reactor as used in Example 1 was charged with 73 grams (0.057 mol) of a hydrogensiloxane of formula (18) and 70 grams of toluene. In a similar manner as in Example 1, 0.105 grams of a platinum catalyst toluene solution (Pt: 2.7 × $10^{-6}$ mol) was added dropwise to the reactor, and thereafter, 34.3 grams of a toluene solution containing 14.3 grams (0.125 mol) of an epoxy compound of formula (11) was added dropwise over 30 minutes.

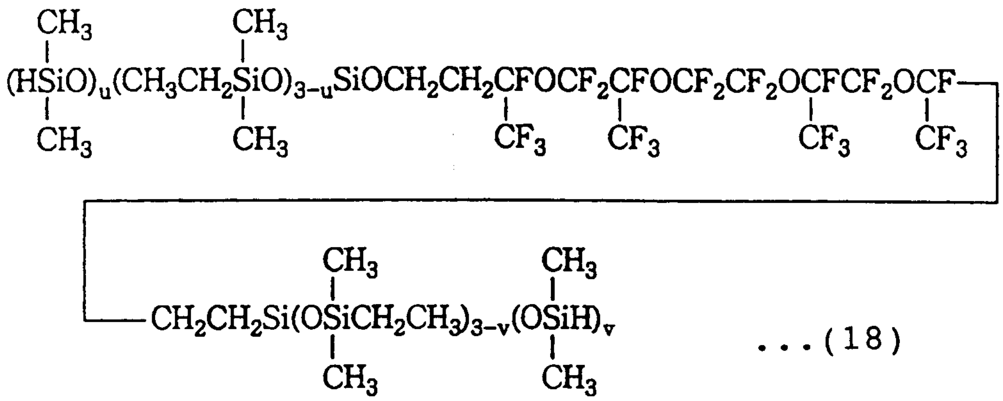

... (18)

In the formula, u and v are integers of 1 to 3, meeting $u + v = 4$.

By following the same procedure as in Example 1, there was obtained 84.1 grams of a product. The product was analyzed by GPC to find that it contained 237.0 grams of a di-adduct (yield 37%). The di-adduct isolated and collected by GPC was identified by analysis to be a mixture of compounds having the structure of formula (19) wherein a, b, c and d are integers of 0 to 2, meeting $a + c = 2$, $b + d = 2$, $1 \leqq a + b \leqq 3$ and $1 \leqq c + d \leqq 3$.

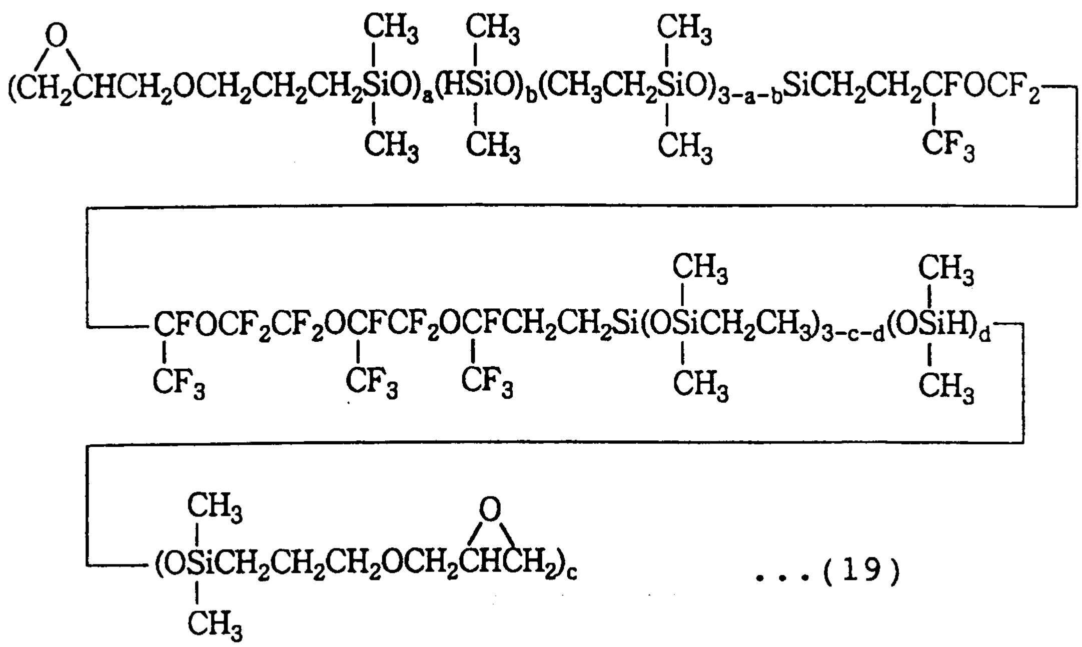

... (19)

Elemental analysis

| | C | H | Si | F |
|---|---|---|---|---|
| Calcd.* (%) | 34.96 | 5.20 | 14.86 | 30.16 |
| Found (%) | 34.23 | 4.89 | 15.21 | 29.96 |

*calculated as $C_{44}H_{78}F_{24}O_{14}Si_{18}$

Mass spectrometry

1510 ($M^+$)

IR absorption spectrum

There appeared a characteristic absorption peak attributable to a SiH group at wavenumber 2140 $cm^{-1}$ and a characteristic absorption peak attributable to an epoxy group (C-H) at wavenumber 3000 to 3080 $cm^{-1}$.

SiH content

| | |
|---|---|
| Calcd.: | 0.0013 mol/g |
| Found: | 0.0014 mol/g |

$^1$H-NMR spectrum

4.58~4.95ppm (Si-H, m, 2H)
0.11~0.49ppm (Si-$CH_3$, m, 36H)
0.66~1.14ppm (Si-$CH_2$-, m, 12H)
1.66~2.35ppm (C-$CH_2$-CF, m, 4H)
3.41~4.00ppm (C-$CH_2$-O, m 8H)
1.27~1.71ppm (C-$CH_2$-C, m, 4H)
3.01~3.35ppm

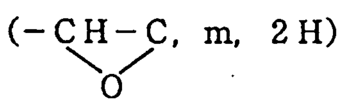

2.44~2.91ppm

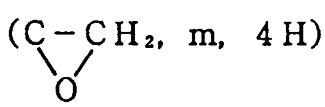

Example 3

A reactor as used in Example 1 was charged with 50 grams (0.067 mol) of a hydrogensiloxane of formula (20) and 70 grams of toluene. In a similar manner as in Example 1, 0.131 grams of a platinum catalyst toluene solution (Pt: 3.35 $\times 10^{-6}$ mol) was added dropwise to the reactor, and thereafter, 35.3 grams of a toluene solution containing 15.3 grams (0.134 mol) of an epoxy compound of formula (11) was added dropwise over 30 minutes.

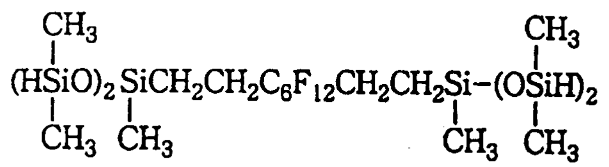

...(20)

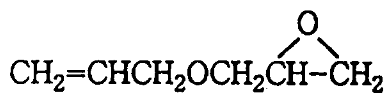

...(11)

By following the same procedure as in Example 1, there was obtained 61.8 grams of a product. The product was analyzed by GPC to find that it contained 31.2 grams of a di-adduct (yield 48%). The di-adduct isolated and collected by GPC was identified by analysis to be a mixture of compounds having the structure of formula (21) wherein a and b are integers of 0 to 2, meeting $a + b = 2$ .

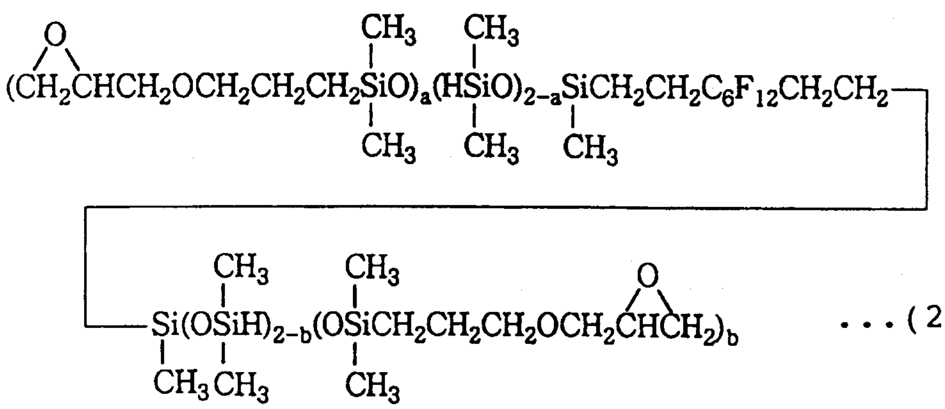

...(21)

Elemental analysis

| | C | H | Si | F |
|---|---|---|---|---|
| Calcd.* (%) | 39.57 | 6.43 | 17.35 | 23.47 |
| Found (%) | 39.19 | 6.75 | 16.98 | 22.04 |

*calculated as $C_{32}H_{62}F_{12}O_8Si_6$

Mas spectrometry

970 ($M^+$)

IR absorption spectrum

There appeared a characteristic absorption peak attributable to a SiH group at wavenumber 2140 $cm^{-1}$ and a characteristic absorption peak attributable to an epoxy group (C-H) at wavenumber 3000 to 3080 $cm^{-1}$.

SiH content

| | |
|---|---|
| Calcd.: | 0.0021 mol/g |
| Found: | 0.0020 mol/g |

$^1$H-NMR spectrum

| | |
|---|---|
| 4.49~4.85ppm | (Si-H, m, 2H) |
| 0.05~0.41ppm | (Si-$CH_3$, m, 30H) |
| 0.41~1.05ppm | (Si-$CH_2$-, m, 8H) |
| 1.80~2.52ppm | (C-$CH_2$-CF, m, 4H) |
| 3.16~3.54ppm | (C-$CH_2$-C, m, 4H) |
| 1.45~1.76ppm | (C-$CH_2$-O, m, 8H) |
| 2.79~3.69ppm | |

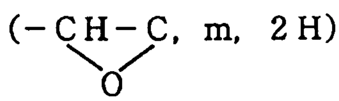

228~2.66ppm

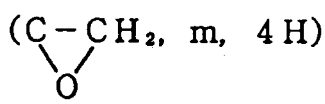

Example 4

A 200-ml flask equipped with a condenser and thermometer was charged with 30 grams (0.025 mol) of a hydrogensiloxane of formula (22) and 15 grams of toluene and heated to a temperature of 75 to 80°C. With thorough stirring, 1.0 gram of a toluene solution containing 0.024 grams of 2-ethylhexanol-modified platinum catalyst having a platinum concentration of 2% (Pt: $2.5 \times 10^{-6}$ mol) was added dropwise to the flask, and thereafter, 7.9 grams of a toluene solution containing 2.9 grams (0.025 mol) of an epoxy compound of formula (11) was added dropwise over 90 minutes.

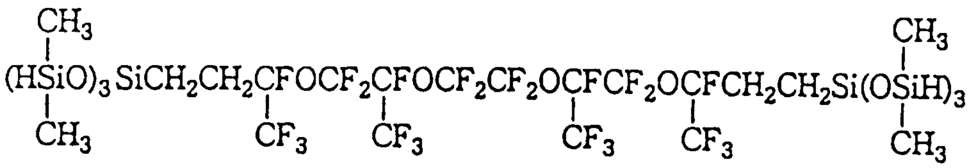

...(22)

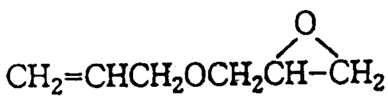

...(11)

The reaction mixture was allowed to cool down, shaken for 1 hour together with activated carbon, removed of the activated carbon by filtration, and subjected to vacuum distillation at 80°C and 10 mmHg for 2 hours for toluene removal, obtaining 35 grams of a product. The product was analyzed by gel permeation chromatography (GPC) to find that it contained 19 grams of a mono-adduct (yield 57%).

The mono-adduct isolated and collected by GPC was analyzed by proton-NMR, mass spectroscopy, IR absorption spectroscopy, elemental analysis and Si-H content measurement. As a result of these analyses, it was identified to have the structure of formula (23).

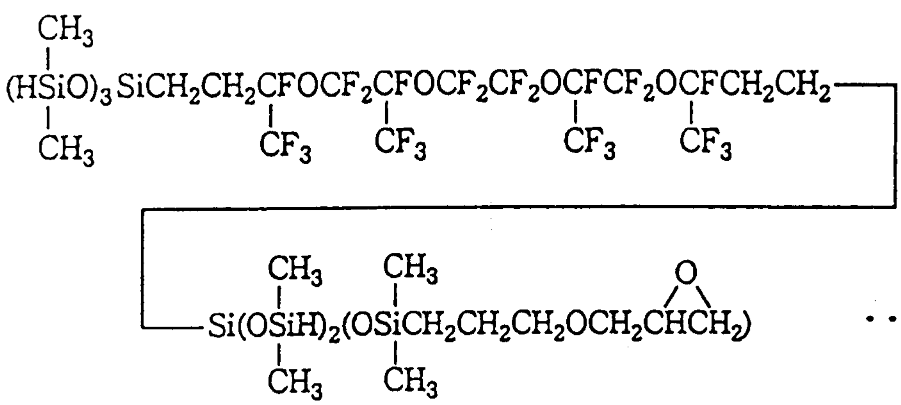

...(23)

Elemental analysis

| | C | H | Si | F |
|---|---|---|---|---|
| Calcd.* (%) | 30.44 | 4.51 | 16.75 | 33.99 |
| Found (%) | 30.21 | 4.72 | 16.34 | 34.15 |

*calculated as $C_{34}H_{60}O_{12}F_{24}Si_8$

Mass spectrometry

1340 ($M^+$)

IR absorption spectrum

There appeared a characteristic absorption peak attributable to a SiH group at wavenumber 2140 $cm^{-1}$ and a characteristic absorption peak attributable to an epoxy group (C-H) at wavenumber 3000 - 3080 $cm^{-1}$. FIG. 1 is an IR absorption spectrum chart of the compound.

SiH content

| | |
|---|---|
| Calcd.: | 0.0037 mol/g |
| Found: | 0.0035 mol/g |

$^1$H-NMR spectrum

| | |
|---|---|
| 4.63~5.04ppm | (Si-H, m, 5H) |
| 0.13~0.57ppm | (Si-$CH_3$, m, 36H) |
| 0.63~1.10ppm | (Si-$CH_2$-, m, 6H) |
| 1.70~2.37ppm | (C-$CH_2$-CF, m, 4H) |
| 1.23~1.70ppm | (C-$CH_2$-C, m, 2H) |
| 3.40~4.03ppm | (C-$CH_2$-O, m, 4H) |
| 2.97~3.33ppm | |

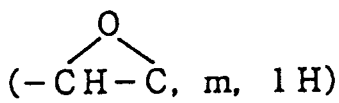

2.47~2.90ppm

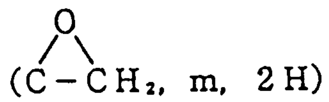

Example 5

A reactor as used in Example 4 was charged with 20 grams (0.019 mol) of a hydrogensiloxane of formula (24) and 10 grams of toluene. In a similar manner as in Example 4, 1.0 gram of a toluene solution containing 0.019 grams of platinum catalyst (Pt: $1.9 \times 10^{-6}$ mol) was added dropwise to the reactor, and thereafter, 7.2 grams of a toluene solution containing 2.2 grams (0.019 mol) of an epoxy compound of formula (11) was added dropwise over 50 minutes.

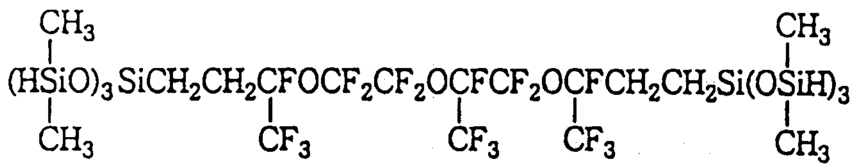

...(24)

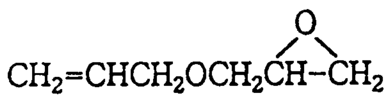

...(11)

By following the same procedure as in Example 4, there was obtained 17.9 grams of a product. The product was analyzed by GPC to find that it contained 8.1 grams of a mono-adduct (yield 36%). As a result of various analyses, the mono-adduct isolated and collected by GPC was identified to have the structure of formula (25).

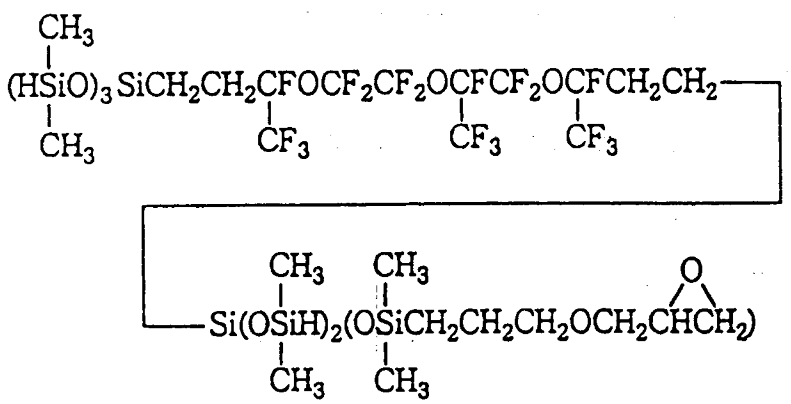

...(25)

Elemental analysis

| | C | H | Si | F |
|---|---|---|---|---|
| Calcd.* (%) | 31.68 | 5.14 | 19.11 | 29.09 |
| Found (%) | 31.32 | 5.41 | 18.46 | 29.66 |

Mass spectrometry

1174 ($M^+$)

IR absorption spectrum

There appeared a characteristic absorption peak attributable to a SiH group at wavenumber 2140 $cm^{-1}$ and a characteristic absorption peak attributable to an epoxy group (C-H) at wavenumber 3000 - 3080 $cm^{-1}$. FIG. 2 is an IR absorption spectrum chart of the compound.

SiH content

| | |
|---|---|
| Calcd.: | 0.0043 mol/g |
| Found: | 0.0046 mol/g |

$^1$H-NMR spectrum

| | |
|---|---|
| 4.50~4,83ppm | (Si-H, m, 5H) |
| 0.03~0.40ppm | (Si-$CH_3$, m, 36H) |
| 0.67~0.93ppm | (Si-$CH_2$-, m, 6H) |
| 1.83~2.50ppm | (C-$CH_2$-CF, m, 4H) |
| 1.40~1.77ppm | (C-$CH_2$-C, m, 2H) |
| 3.17~3.70ppm | (C-$CH_2$-O, m, 4H) |
| 2.73~3.13ppm | |

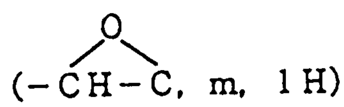

2.23~2.77ppm

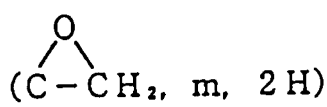

Example 6

A reactor as used in Example 4 was charged with 20 grams (0.016 mol) of a hydrogensiloxane of formula (26) and 10 grams of toluene. In the same way as in Example 4, 1.0 gram of a toluene solution containing 0.016 grams of platinum catalyst (Pt: 1.6 × $10^{-6}$ mol) was added dropwise to the reactor, and thereafter, 20.5 grams of a toluene solution containing 5.5 grams (0.048 mol) of an epoxy compound of formula (11) was added dropwise over 90 minutes.

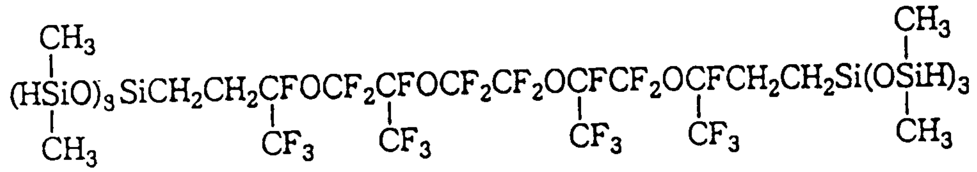

...(26)

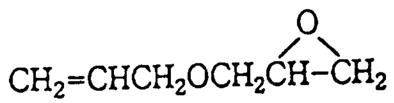

...(11)

By following the same procedure as in Example 4, there was obtained 23.4 grams of a product. The product was analyzed by GPC to find that it contained 7.3 grams of a tri-adduct (yield 29%). As a result of various analyses, the tri-adduct isolated and collected by GPC was identified to have the structure of formula (27).

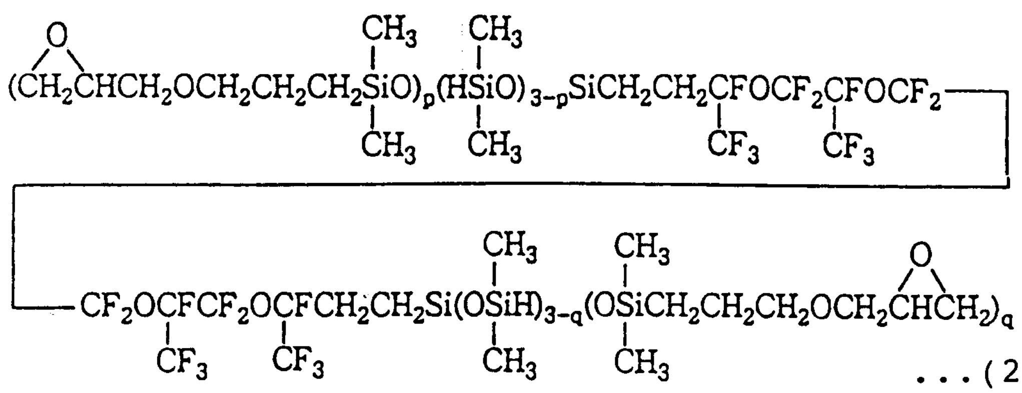

...(27)

In the formula, p and q are integers meeting $p + q = 3$.

<u>Elemental analysis</u>

| | C | H | Si | F |
|---|---|---|---|---|
| Calcd.* (%) | 35.20 | 5.14 | 14.29 | 29.05 |
| Found (%) | 34.98 | 5.21 | 14.73 | 28.47 |

*calculated as $C_{48}H_{80}O_{16}F_{24}Si_8$

<u>Mass spectrometry</u>

1568 ($M^+$)

<u>IR absorption spectrum</u>

There appeared a characteristic absorption peak attributable to a SiH group at wavenumber 2140 $cm^{-1}$ and a characteristic absorption peak attributable to an epoxy group (C-H) at wavenumber 3000 - 3080 $cm^{-1}$. FIG. 3 is an IR

absorption spectrum chart of the compound.

SiH content

| | |
|---|---|
| Calcd.: | 0.0019 mol/g |
| Found: | 0.0021 mol/g |

$^1$H-NMR spectrum

| | |
|---|---|
| 4.50~4.90ppm | (Si-H, m, 3H) |
| 0.03~0.37ppm | ($Si-CH_3$, m, 36H) |
| 0.37~0.90ppm | ($Si-CH_2$-, m, 10H) |
| 1.77~2.47ppm | ($C-CH_2-CF$, m, 4H) |
| 1.27~1.77ppm | ($C-CH_2-C$, m, 6H) |
| 3.13~3.73ppm | ($C-CH_2-O$, m, 12H) |
| 2.73~3.13ppm | |

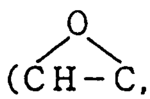 m, 3H)

2.23~2.73ppm

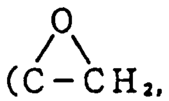 m, 6H)

Example 7

A reactor as used in Example 4 was charged with 20 grams (0.016 mol) of hydrogensiloxane of formula (28) and 10 grams of toluene. In a similar manner as in Example 4, 1.0 gram of a toluene solution containing 0.016 grams of platinum catalyst (Pt: $1.6 \times 10^{-6}$ mol) was added dropwise to the reactor, and thereafter, 6.6 grams of a toluene solution containing 1.6 grams (0.016 mol) of an epoxy compound of formula (12) was added dropwise over 30 minutes.

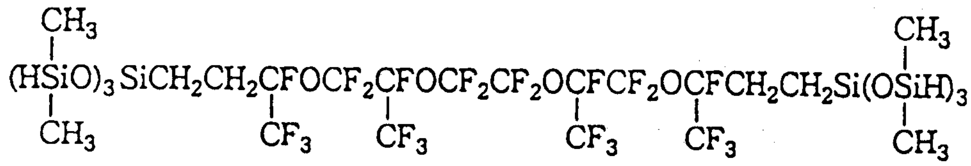

...(28)

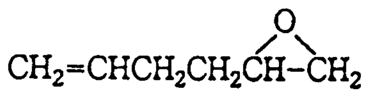

...(12)

By following the same procedure as in Example 4, there was obtained 21.0 grams of a product. The product was analyzed by GPC to find that it contained 7.4 grams of a mono-adduct (yield 35%). As a result of various analyses, the mono-adduct isolated and collected by GPC was identified to have the structure of formula (29).

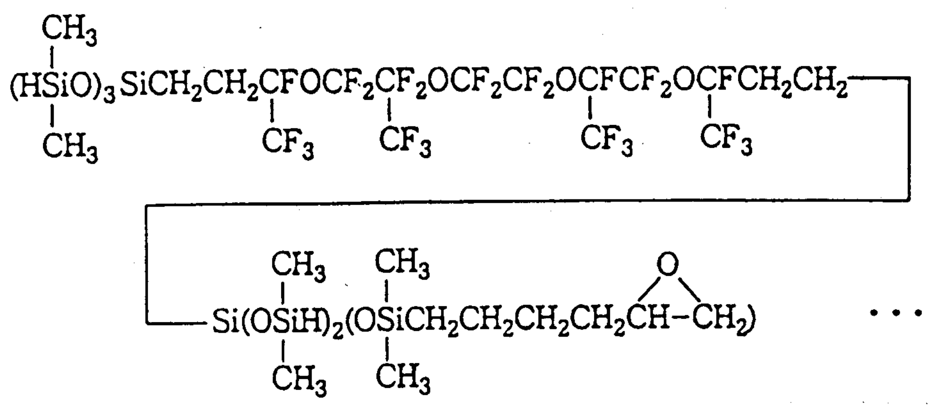

...(29)

Elemental analysis

| | C | H | Si | F |
|---|---|---|---|---|
| Calcd.* (%) | 30.81 | 4.56 | 16.95 | 34.40 |
| Found (%) | 30.60 | 4.91 | 16.37 | 34.79 |

*calculated as $C_{34}H_{60}O_{11}F_{24}Si_8$

Mass spectrometry

1324 ($M^+$)

IR absorption spectrum

There appeared a characteristic absorption peak attributable to a SiH group at wavenumber 2140 $cm^{-1}$. FIG. 4 is an IR absorption spectrum chart of the compound.

SiH content

| | |
|---|---|
| Calcd.: | 0.0038 mol/g |
| Found: | 0.0033 mol/g |

$^1$H-NMR spectrum

4.47~4.87ppm (Si-H, m, 5H)
0.03~0.37ppm ($Si-CH_3$, m, 36H)
0.37~0.97ppm ($Si-CH_2-C$, m, 6H)
1.03~1.73ppm ($C-CH_2-C$, m, 6H)
1.80-2.50ppm ($C-CH_2-CF$, m, 4H)
2.80~3.00ppm

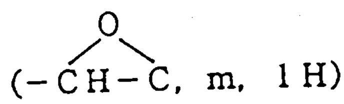

2.50~2.73ppm

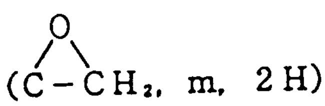

Example 8

A reactor as used in Example 4 was charged with 10 grams (0.012 mol) of a hydrogensiloxane of formula (30) and 5 grams of toluene. In a similar manner as in Example 4, 1.0 gram of a toluene solution containing 0.012 grams of platinum catalyst (Pt: $1.2 \times 10^{-6}$ mol) was added dropwise to the reactor, and thereafter, 4.3 grams of a toluene solution containing 1.3 grams (0.012 mol) of an epoxy compound of formula (11) was added dropwise,over 30 minutes.

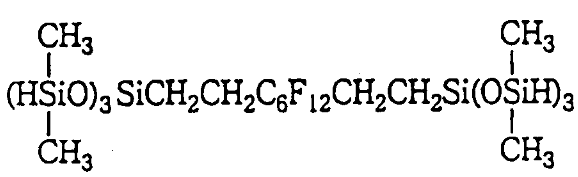
. . . (30)

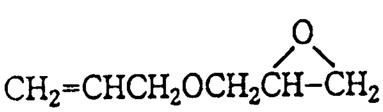
. . . (11)

By following the same procedure as in Example 4, there was obtained 11.2 grams of a product. The product was

analyzed by GPC to find that it contained 5.5 grams of a mono-adduct (yield 50%). As a result of various analyses, the mono-adduct isolated and collected by GPC was identified to have the structure of formula (31).

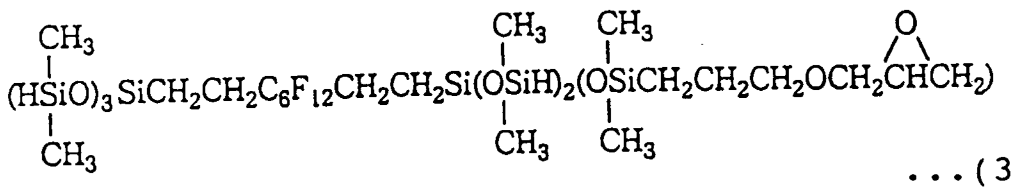

...(31)

Elemental analysis

| | C | H | Si | F |
|---|---|---|---|---|
| Calcd.*(%) | 34.41 | 6.19 | 22.99 | 23.32 |
| Found (%) | 34.73 | 5.82 | 22.19 | 23.68 |

*calculated as $C_{28}H_{60}O_8F_{12}Si_8$

Mass spectrometry

976 ($M^+$)

IR absorption spectrum

There appeared a characteristic absorption peak attributable to a SiH group at wavenumber 2140 $cm^{-1}$ and a characteristic absorption peak attributable to an epoxy group (C-H) at wavenumber 3000 - 3080 $cm^{-1}$. FIG. 5 is an IR absorption spectrum chart of the compound.

SiH content

| | |
|---|---|
| Calcd.: | 0.0051 mol/g |
| Found: | 0.0048 mol/g |

$^1$H-NMR spectrum

| | |
|---|---|
| 4.53~4.87ppm | (Si-H, m, 5H) |
| 0.07~0.40ppm | ($Si-CH_3$, m, 36H) |
| 0.40~1.03ppm | ($Si-CH_2-$, m, 6H) |
| 1.83~2.50ppm | ($C-CH_2-CF$, m, 4H) |
| 1.47~1.80ppm | ($C-CH_2-C$, m, 2H) |
| 3.20~3.57ppm | ($C-CH_2-O$, m, 4H) |
| 2.77~3.67ppm | |

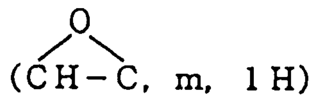

2.30~2.67ppm

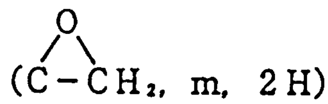

Example 9

A reactor as used in Example 4 was charged with 20 grams (0.016 mol) of a hydrogensiloxane of formula (32) and 10 grams of toluene. In a similar manner as in Example 4, 1.0 gram of a toluene solution containing 0.016 grams of platinum catalyst (Pt: $1.6 \times 10^{-6}$ mol) was added dropwise to the reactor, and thereafter, 7.0 grams of a toluene solution containing 2.0 grams (0.016 mol) of an epoxy compound of formula (13) was added dropwise over 60 minutes.

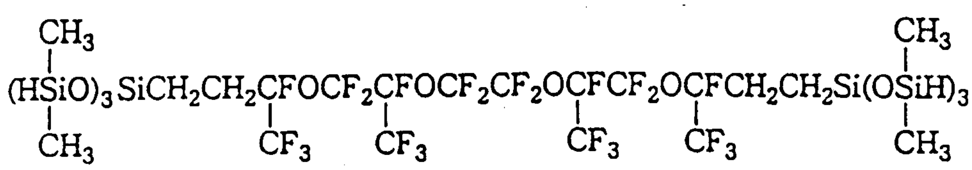

...(32)

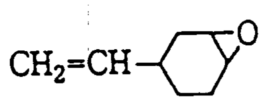

...(13)

By following the same procedure as in Example 4, there was obtained 21.2 grams of a product. The product was analyzed by GPC to find that it contained 12.9 grams of a mono-adduct (yield 60%), As a result of various analyses, the mono-adduct isolated and collected by GPC was identified to have the structure of formula (33).

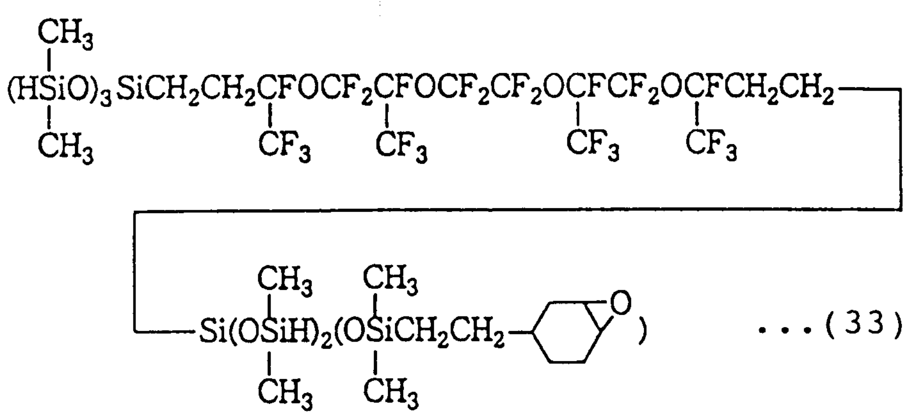

...(33)

Elemental analysis

| | C | H | Si | F |
|---|---|---|---|---|
| Calcd.*(%) | 31.99 | 4.62 | 16.62 | 33.74 |
| Found (%) | 31.76 | 4.83 | 16.09 | 34.53 |

Mass spectrometry

1350 ($M^+$)

SiH content

| | |
|---|---|
| Calcd.: | 0.0037 mol/g |
| Found: | 0.0034 mol/g |

$^1$H-NMR spectrum

4.53~4.90ppm (Si-H, m, 5H)
0.03~0.43ppm (Si-$CH_3$, m, 36H)
0.47~0.93ppm (Si-$CH_2$-C, m, 6H)
1.87~2.53ppm (CF-$CH_2$-C, m, 4H)
1.33~2.93ppm (C-$CH_2$-C, m, 8H)
2.03~2.20ppm (C-CH-C, m, 1H)
2.90~3.13ppm

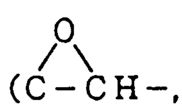 , m, 2 H)

Example 10

A 200-ml three-necked flask equipped with a reflux condenser and thermometer was charged with 15 grams of toluene and 30.0 grams (0.025 mol) of a hydrogensiloxane of the following formula.

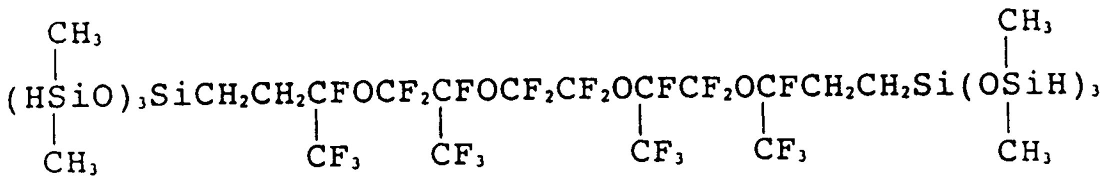

The flask was heated to a temperature of 70 to 80°C. With thorough stirring, 1.0 gram of a toluene solution containing 0.024 grams 2-ethylhexanol-modified complex of chloroplatinic acid catalyst having a platinum concentration of 2% (Pt: $2.5 \times 10^{-6}$ mol) was added dropwise to the flask. Thereafter, 8.8 grams of a toluene solution containing 3.8 grams (0.025 mol) of an alkoxy compound: $CH_2=CHSi(OCH_3)_3$ was added dropwise over 90 minutes.

The reaction mixture was allowed to cool down, shaken for 1 hour together with activated carbon, removed of the activated carbon by filtration, and subjected to vacuum distillation at 110°C and 10 mmHg for 1 hour for solvent removal, obtaining 36.5 grams of a product. The product was analyzed by gel permeation chromatography (GPC) to find that it contained 20.1 grams of a mono-adduct (yield 59%).

The end compound was analyzed by proton-NMR, mass spectroscopy, IR absorption spectroscopy, elemental analysis and Si-H content measurement. As a result of these analyses, the mono-adduct isolated and collected by GPC was identified to have the structure of the following formula.

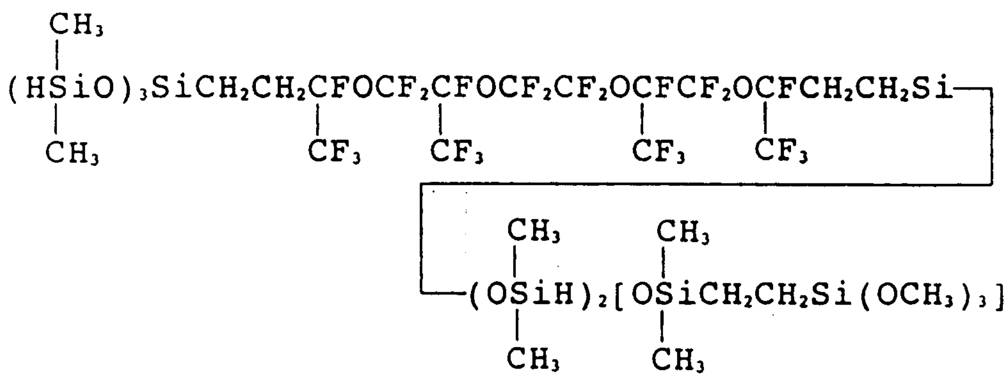

Elemental analysis

| | C | H | Si | F |
|---|---|---|---|---|
| Calcd.*(%) | 28.82 | 4.51 | 18.34 | 33.19 |
| Found (%) | 27.54 | 4.71 | 17.66 | 32.14 |

*calculated as $C_{33}H_{62}O_{13}F_{24}Si_9$

Mass spectrometry

1374 ($M^+$)

IR absorption spectrum

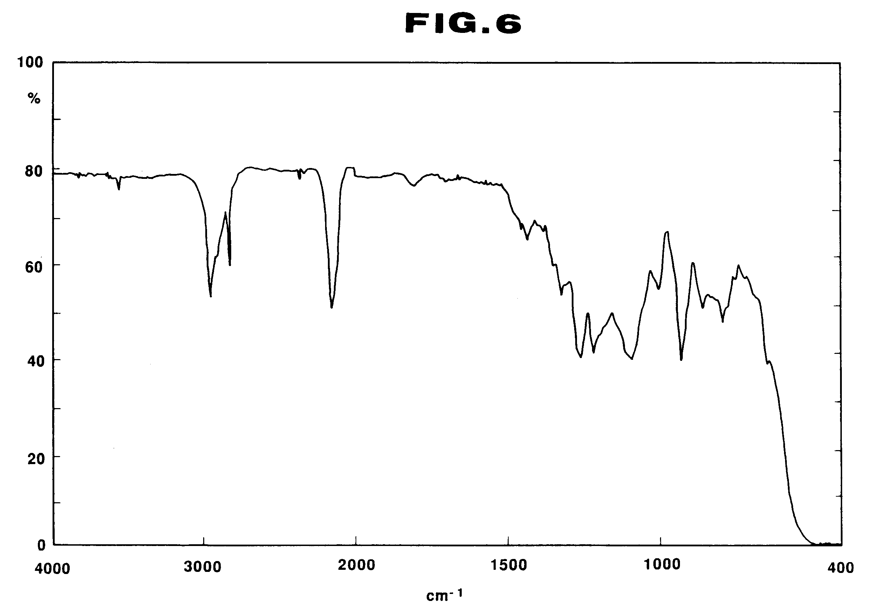

There appeared a characteristic absorption peak attributable to a SiH group at wavenumber 2140 $cm^{-1}$ and a characteristic absorption peak attributable to Si-$OCH_3$ at wavenumber 2850 $cm^{-1}$. FIG. 6 is an IR absorption spectrum chart of the compound.

SiH content

| | |
|---|---|
| Calcd.: | 0.0036 mol/g |
| Found: | 0.0031 mol/g |

$^1$H-NMR spectrum:
(solvent $CDCl_3$, internal standard TMS)

| | |
|---|---|
| 0.03~0.33 | (Si-C$H_3$, 36H, m) |
| 0.40~1.27 | (Si-C$H_2$, 8H) |
| 1.67~2.50 | (C-C$H_2$-C, 4H) |
| 3.13~3.73 | (O-C$H_3$, 9H, m) |
| 4.50~4.90 | (Si-H, 5H, m) |

There have been described novel siloxane compounds which are effective for imparting adhesion to a wide variety of resins. They are useful tackifiers for imparting adhesion to not only conventional resins, but also fluorinated silicone resins and rubbers since they have good affinity to fluorinated silicone resins and rubbers by virtue of the inclusion of a fluorinated group. They also make a great contribution to solvent resistance and minimal water permeability.

Although some preferred embodiments have been described, many modifications and variations may be made thereto in the light of the above teachings. It is therefore to be understood that the invention may be practised otherwise than as specifically described in the Examples.

## Claims

**1.** A siloxane compound of the formula (1):

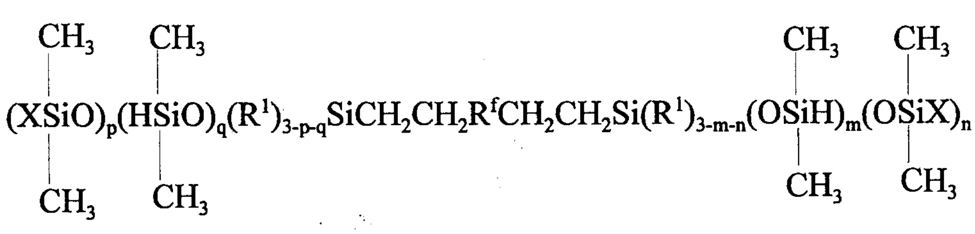

...(1)

wherein

$R^f$ is a perfluoropolyether or perfluoroalkylene group,
groups $R^1$ are selected from monovalent lower hydrocarbon groups and groups of the formula (2):

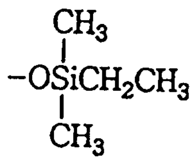

··· (2),

groups X are selected from groups of the following formulae (3), (4) and (5):

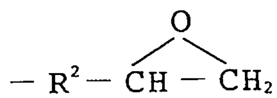

...(3)

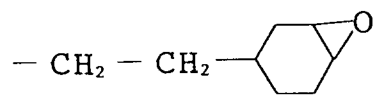

...(4)

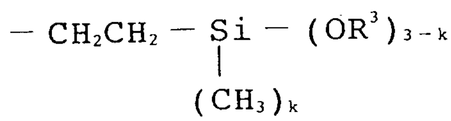

...(5)

wherein $R^2$ is a divalent organic group, $R^3$ is a monovalent hydrocarbon group and k is an integer of from 0 to 2, and
p, q, m and n are integers of 0 to 3 satisfying the relationships
$0 < p + q \leqq 3$
$0 < m + n \leqq 3$
$0 < p + n$
$0 < q + m$ and
$0 < p + q + m + n \leqq 6$.

2. A siloxane compound according to claim 1 in which $R^f$ is a perfluoropolyether group having from 4 to 15 carbon atoms and according with one of the following formulae (7) and (8):

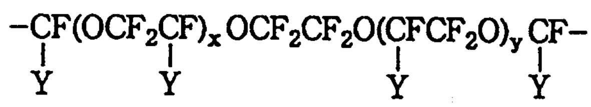

··· (7)

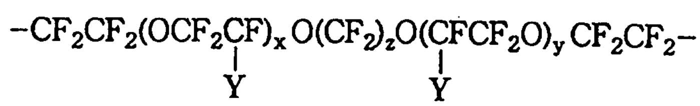

··· (8)

in which Y is F or $CF_3$, x and y are selected from 0, 1 and 2, $0 \leq x + y \leq 3$, and z is any integer.

3. A siloxane compound according to claim 1 in which $R^f$ is a perfluoropolyalkylene group according with the formula

$$-C_wF_{2w}-$$

where w is an integer of from 2 to 10.

**4.** A siloxane compound according to any one of claims 1 to 3 in which groups $R^1$ are $C_{1-6}$ alkyl groups.

**5.** A siloxane compound according to any one of the preceding claims in which the groups X are of the formula (3) and $R^2$ is either $C_{1-6}$ alkylene, which may have a terminal or intermediate oxygen atom, or a divalent organic group including an ester linkage.

**6.** A siloxane compound according to claim 5 in which $R^2$ is $-(CH_2)_4-$, $-(CH_2)_2OCH_2-$, $-CH_2CH_2-$, $-(CH_2)_3O-$ or $-(CH_2)_3OCH_2-$.

**7.** A siloxane compound according to any one of claims 1 to 4 in which groups X are of the formula (5) and $R^3$ is $C_{1-6}$ alkyl, $C_{2-6}$ alkenyl or phenyl.

**8.** A method for the preparation of a compound according to any one of claims 1 to 7 comprising an addition reaction using a platinum series catalyst, between

- an organohydrogensiloxane having SiH at the positions of the groups X in the desired siloxane compound, and
- an epoxy or alkoxysilyl compound corresponding to the group X and with an aliphatic double bond to react with the SiH of the organohydrogensiloxane.

**9.** Use of a compound according to any one of claims 1 to 7 as a tackifier for a silicone resin or rubber.

**10.** A silicone resin or rubber adhesion-modified by a compound according to any one of claims 1 to 7.

**11.** A silicone resin or rubber according to claim 4 which is fluorinated.

**Patentansprüche**

**1.** Siloxanverbindung der Formel (1):

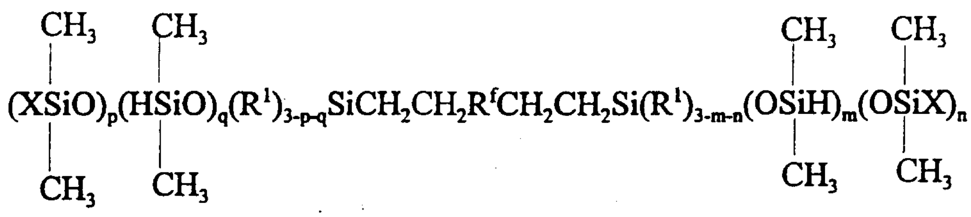

...(1)

worin

$R^f$ eine Perfluorpolyether- oder Perfluoralkylen-Gruppe ist,
die Gruppen $R^1$ aus einwertigen niederen Kohlenwasserstoff-Gruppen und Gruppen der Formel (2) ausgewählt sind:

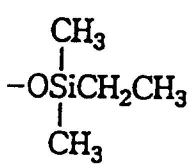

··· (2),

die Gruppen X aus Gruppen der folgenden Formeln (3), (4) und (5) ausgewählt sind:

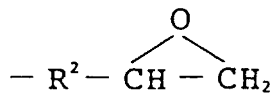 ... (3)

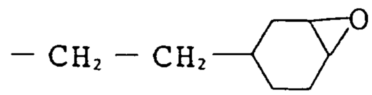 ... (4)

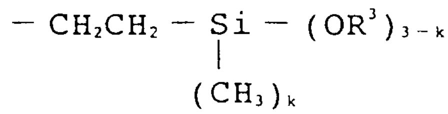 ... (5)

worin $R^2$ eine Zweiwertige organische Gruppe ist, $R^3$ eine einwertige Kohlenwasserstoff-Gruppe und k eine ganze Zahl von 0 bis 2 ist, und

p, q, m und n ganze Zahlen von 0 bis 3 sind, die den folgenden Beziehungen genügen:

$0 < p + q \leq 3$
$0 < m + n \leq 3$
$0 < p + n$
$0 < q + m$ und
$0 < p + q + m + n \leq 6$ .

2. Siloxanverbindung nach Anspruch 1, worin $R^f$ eine Perfluorpolyether-Gruppe mit 4 bis 15 Kohlenstoffatomen ist und einer der folgenen Formel (7) und (8) entspricht:

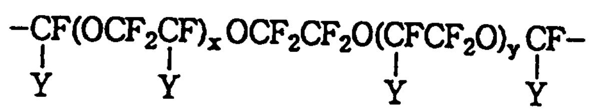 ... (7)

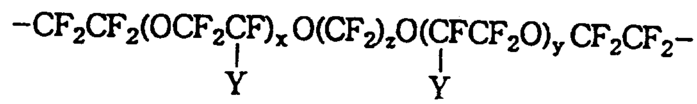 ... (8)

worin Y = F oder $CF_3$ ist, x und y aus 0, 1 und 2 ausgewählt sind, wobei gilt: $0 \leq x + y \leq 3$ , und z eine beliebige ganze Zahl ist.

3. Siloxanverbindung nach Anspruch 1, worin $R^f$ eine Perfluorpolyalkylen-Gruppe der Formel

$$-C_wF_{2w}-$$

ist, worin w eine ganze Zahl von 2 bis 10 ist.

4. Siloxanverbindung nach einem der Ansprüche 1 bis 3, worin die Gruppen $R^1$ $C_{1-6}$-Alkylgruppen sind.

5. Siloxanverbindung nach einem der vorangegangenen Ansprüche, worin die Gruppen X der Formel (3) entsprechen und R2 entweder $C_{1-6}$-Alkylen, das am Ende oder an anderer Stelle in der Kette ein Sauerstoffatom aufweisen kann, oder eine zweiwertige organische Gruppe ist, die eine Esterbindung enthält.

6. Siloxanverbindung nach Anspruch 5, worin $R^2$ = $-(CH_2)_4-$, $-(CH_2)_2OCH_2-$, $-CH_2CH_2-$, $-(CH_2)_3O-$ oder $-(CH_2)_3OCH_2-$ ist.

7. Siloxanverbindung nach einem der Ansprüche 1 bis 4, in der die Gruppen X der Formel (5) entsprechen und $R^3$ = $C_{1-6}$-Alkyl, $C_{2-6}$-Alkenyl oder Phenyl ist.

8. Verfahren zur Herstellung einer Verbindung nach einem der Ansprüche 1 bis 7, umfassend eine Additionsreaktion unter Verwendung eines Platinreihen-Katalysators zwischen

einem Organohydrogensiloxan mit SiH an den Positionen der Gruppen X in der gewünschten Siloxanverbindung, und

einer der Gruppe X entsprechenden Epoxy- oder Alkoxysilylverbindung mit einer aliphatischen Doppelbindung zur Reaktion mit dem SiH des Organohydrogensiloxans.

9. Verwendung einer Verbindung nach einem der Ansprüche 1 bis 7 als Klebrigmacher für ein(en) Silikonharz oder -kautschuk.

10. Silikonharz oder -kautschuk, dessen Haftkraft mittels einer Verbindung nach einem der Ansprüche 1 bis 7 modifiziert ist.

11. Silikonharz oder -kautschuk nach Anspruch 10, das/der fluoriert ist.

**Revendications**

1. Composé de siloxane de la formule (1) :

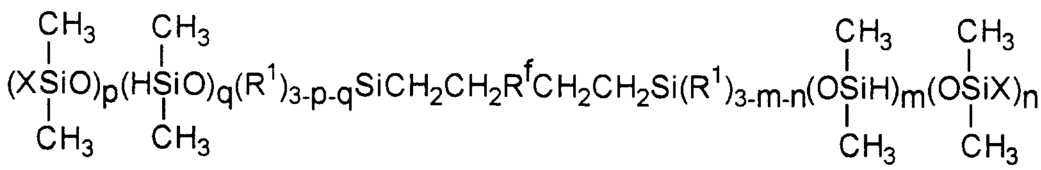
...(1)

où

$R^f$ est un groupe perfluoropolyéther ou perfluoroalkylène,

les groupes $R^1$ sont sélectionnés parmi des groupes hydrocarbures inférieurs monovalents et des groupes de la formule (2) :

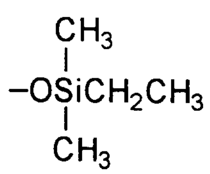
...(2),

les groupes X sont sélectionnés parmi les groupes des formules (3), (4) et (5) suivantes :

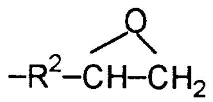
...(3)

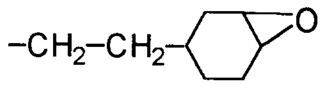
...(4)

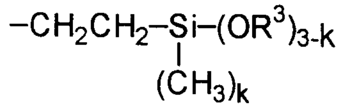
...(5)

où $R^2$ est un groupe organique divalent, $R^3$ est un groupe hydrocarbure monovalent et k est un nombre entier de 0 à 2, et

p, q, m et n sont des nombres entiers de 0 à 3 satisfaisant les relations
$0 < p + q \leqq 3$
$0 < m + n \leqq 3$
$0 < p + n$
$0 < q + m$ et
$0 < p + q + m + n \leqq 6$.

2. Composé de siloxane selon la revendication 1 dans lequel Rf est un groupe perfluoropolyéther ayant 4 à 15 atomes de carbone et selon l'une des formules (7) et (8) suivantes :

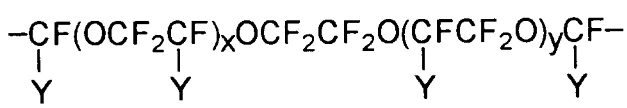
. (7)

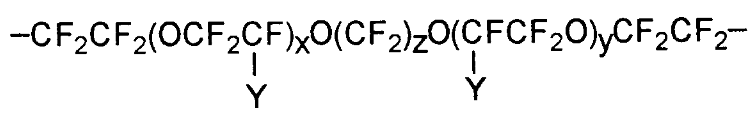
... (8)

où Y est F ou $CF_3$, x et y sont sélectionnés parmi 0, 1 et 2, $0 \leq x + y \leq 3$, et z est tout nombre entier.

3. Composé de siloxane selon la revendication 1 dans lequel $R^f$ est un groupe perfluoropolyalkylène selon la formule

$$- C_wF_{2w} -$$

où w est un nombre entier de 2 à 10.

4. Composé de siloxane selon l'une quelconque des revendications 1 à 3 où les groupes $R^1$ sont des groupes alkyles $C_{1-6}$.

5. Composé de siloxane selon l'une quelconque des revendications précédentes où les groupes X sont de la formule (3) et $R^2$ est soit alkylène $C_{1-6}$, qui peut avoir un atome d'oxygène terminal ou intermédiaire ou bien un groupe organique divalent comprenant un enchaînement d'ester.

6. Composé de siloxane selon la revendication 5 dans lequel $R^2$ est $-(CH_2)_4-$, $-(CH_2)_2OCH_2-$, $-CH_2CH_2-$, $-(CH_2)_3O-$ ou $-(CH_2)_3OCH_2-$

7. Composé de siloxane selon l'une quelconque des revendications 1 à 4, où les groupes X sont dans la formule (5) et $R^3$ est alkyle $C_{1-6}$, alcényle $C_{2-6}$ ou phényle.

8. Méthode pour la préparation d'un composé selon l'une quelconque des revendications 1 à 7, comprenant une réaction d'addition en utilisant un catalyseur de la série platine, entre

   - un organohydrogénosiloxane ayant SiH aux positions des groupes X dans le composé désiré de siloxane, et

   - un composé époxy ou alkoxysilyle correspondant au groupe X et avec une double liaison aliphatique pour réagir avec SiH de l'organohydrogénosiloxane.

9. Utilisation d'un composé selon l'une quelconque des revendications 1 à 7 en tant qu'agent d'adhésivité pour une résine de silicone ou un caoutchouc.

10. Adhérence d'une résine de silicone ou du caoutchouc modifiée par un composé selon l'une quelconque des revendications 1 à 7.

11. Résine de silicone ou caoutchouc selon la revendication 4 qui est fluoré.

# FIG.1

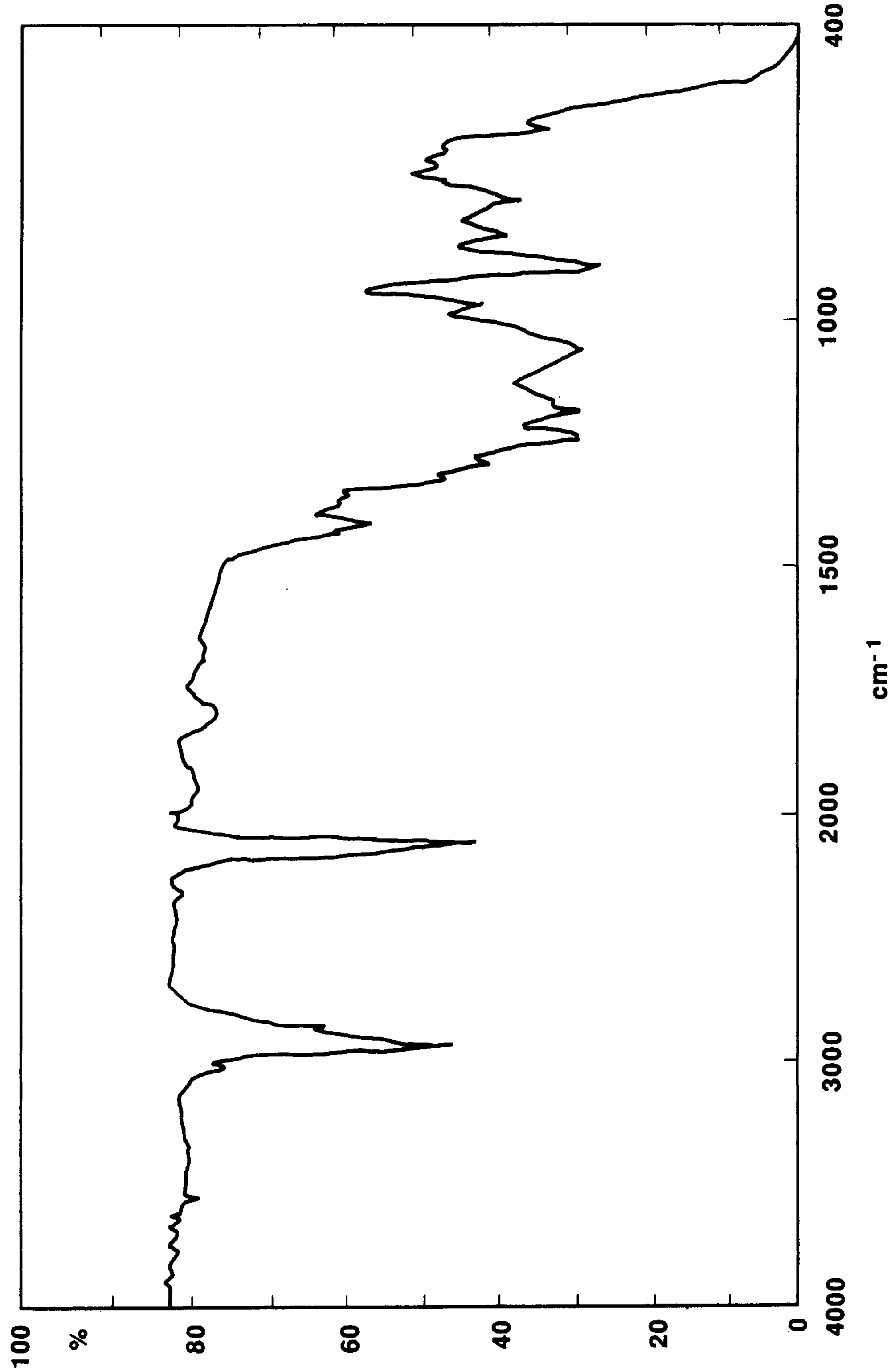

FIG. 2

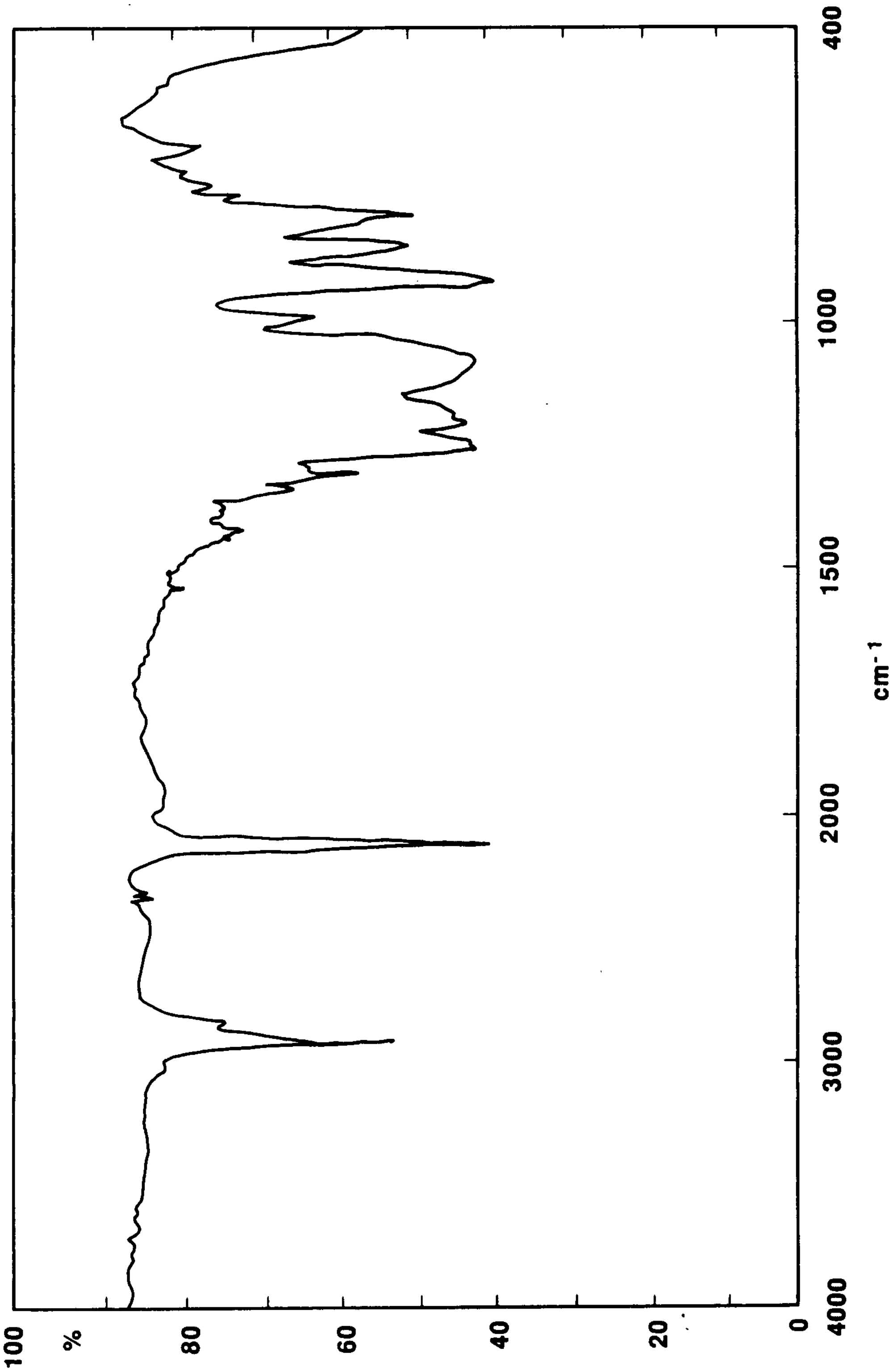

FIG. 3

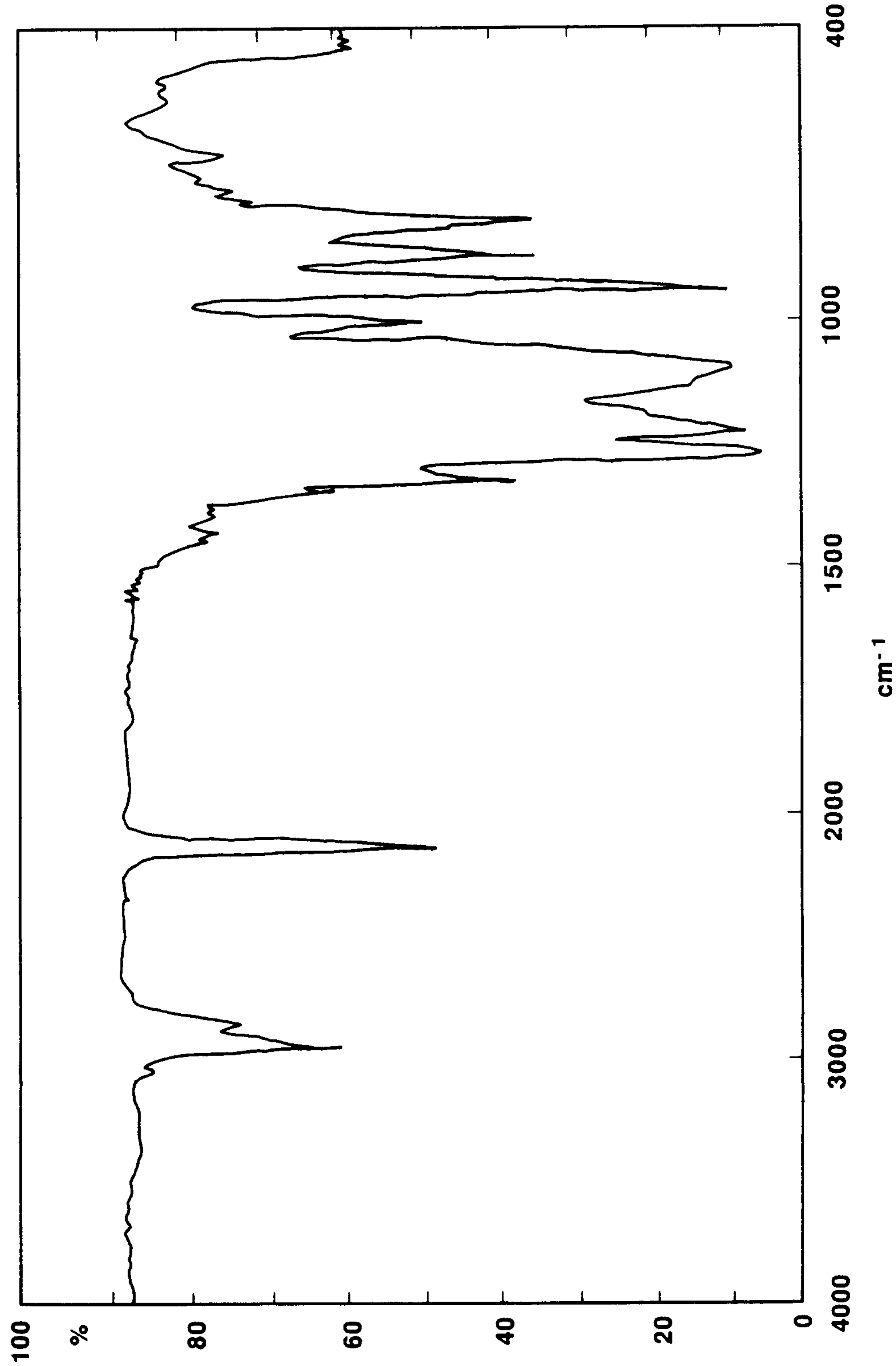

FIG. 4

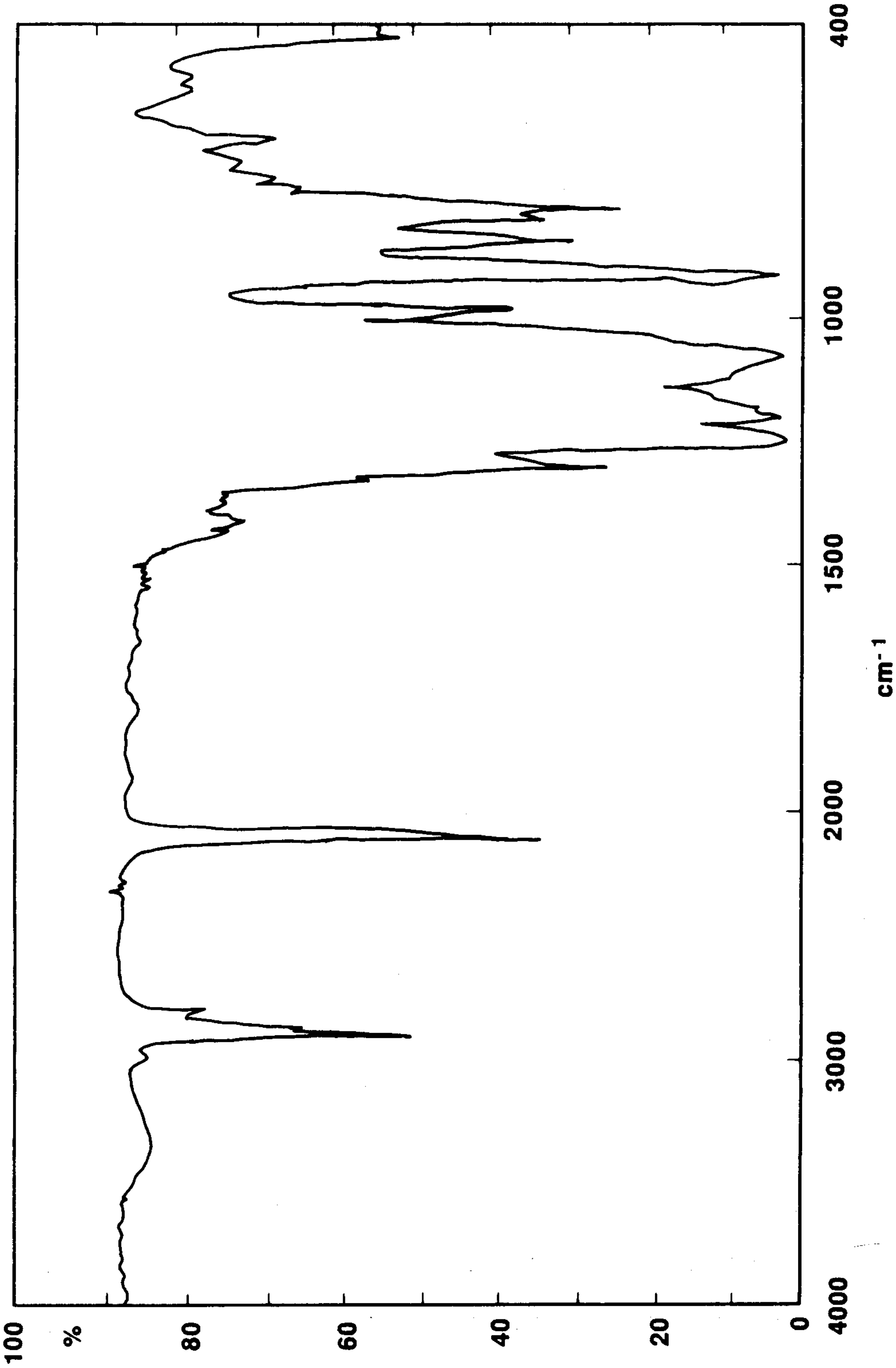

FIG. 5

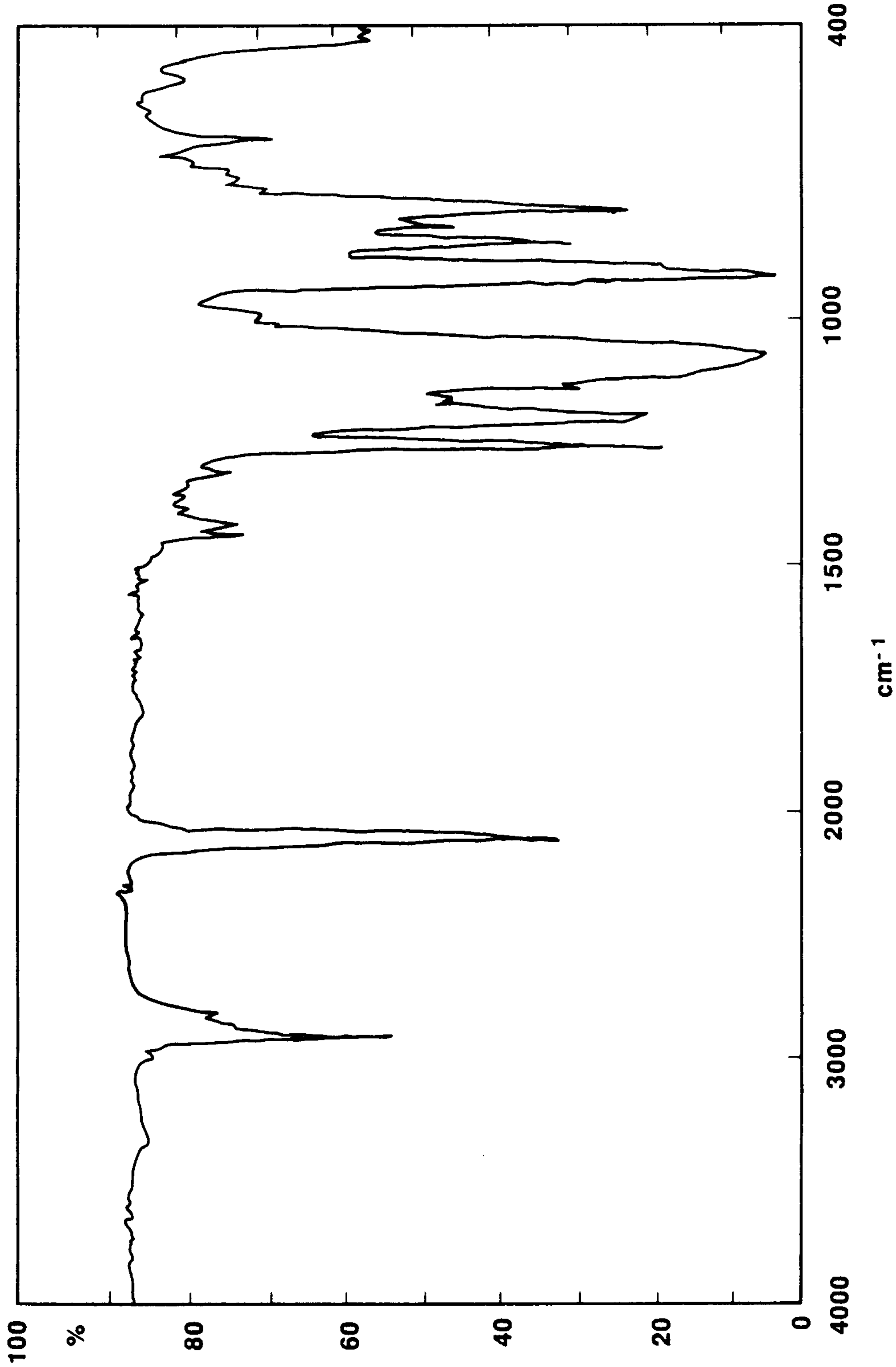

FIG. 6